# EUROPÄISCHE PATENTSCHRIFT

(11) **EP 1 780 740 B1**
(45) Veröffentlichungstag und Bekanntmachung des Hinweises auf die Patenterteilung: **25.02.2009**
(21) Anmeldenummer: 05023427.7
(22) Anmeldetag: 26.10.2005
(51) Int. Cl.: H01H 33/34

(54) **Magnetvorsteuerventil für hydromechanische Trennschalter**
Solenoid pilot valve for hydromechanical disconnecting switch
Electrovanne pilote pour sectionneur hydromécanique

(43) Veröffentlichungstag der Anmeldung: 02.05.2007
(73) Patentinhaber: HAWE Hydraulik SE, 81673 München (DE)
(72) Erfinder: Heusser, Martin, Dipl.-Ing., 81245 München (DE)
(74) Vertreter: Grünecker, Kinkeldey, Stockmair & Schwanhäusser Anwaltssozietät

(56) Entgegenhaltungen:
- DE-B- 1 169 562
- DE-U- 1 803 373
- US-A- 4 387 280

## Beschreibung

Die Erfindung betrifft ein Magnetvorsteuerventil gemäß Oberbegriff des Patentanspruchs 1.

Hydromechanische Trennschalter werden zum Unterbrechen großer Stromleistungen eingesetzt. Beispielsweise wird im Internet ein hydromechanischer Trennschalter der Firma ABB des Typs "Hydromechanical Spring Drives Type HMB" gezeigt, der mit einer Kombination gespeicherter Ringfeder-Kraft und hydraulischer Kraftübertragung betrieben wird. Die Hydrauliksteuerung des Trennschalters weist ein druckvorgesteuertes Hauptventil auf, dem Magnetvorsteuerventile zugeordnet sind. Solche Magnetvorsteuerventile sind beispielsweise aus der technischen Informationsschrift 540903c der Firma Heilmeier & Weinlein, Streitfeldstraße 25, 81673 München unter dem Typ "Magnetventil Z7463 C-G24" bekannt.

Da Trennschalter weltweit eingesetzt werden unterliegen sie gegebenenfalls von Land zu Land verschiedenen lokalen Vorschriften. In einigen Ländern kommt es auf eine extrem kurze Schaltzeit des Trennschalters unter hoher Stromleistung an, während in anderen Ländern der Trennschalter bis zum Erreichen eines bestimmten Werts der Stromleistung gar nicht ansprechen darf, beispielsweise solange eine Unterspannung gegenüber der Normalspannung vorliegt. Für eine kurze Schaltzeit wird im ersten Fall die vom Betätigungsmagneten zu überwindende Schließfeder so schwach ausgelegt, dass das Schließelement gerade zuverlässig auf dem Sitz gehalten wird. Um hingegen das Nichtansprechen des Trennschalters bei Unterspannung sicherzustellen, wird im zweiten Fall eine stärkere Schließfeder eingebaut, die bei Unterspannung das Durchschalten verhindert. Dabei wird jeweils der Betätigungsmagnet mit einem Strom beaufschlagt, der zu dem vom Trennschalter überwachten Strom zumindest proportional ist. Der Anker der bekannten Magnetvorsteuerventile steht bei nicht bestromtem Permanentmagneten in einer Stellung entsprechend dem Anzugskontakt mit dem am Sitz gehaltenen Schließglied, d.h. relativ nahe beim Kernteil des Betätigungsmagneten, so dass selbst bei Bestromung mit Unterspannung am Anker eine signifikante Anzugskraft zum Kernteil wirkt. Deshalb muss im zweiten Fall die dieser Kraft widerstehende Schließfeder relativ stark ausgelegt werden, was jedoch zu einer Verzögerung bei der Schaltzeit führt. Demzufolge kann dieses Magnetvorsteuerventil nicht für den ersten Einsatzfall mit möglichst kurzer Schaltzeit verwendet werden. Da der Hersteller des Vorsteuermagnetventils als Zulieferer des Herstellers des Trennschalters von vornherein nicht immer wissen kann, welche Anforderungen der Trennschalter zu erfüllen haben wird, bedeutet dies ein logistisches Problem. Ähnliche Probleme gibt es beim Hersteller des Trennschalters. Zusätzlich bedeuten die unterschiedlichen Federbestückungen Mehrkosten. Es besteht deshalb Bedarf nach einem Magnetvorsteuerventil, das unabhängig vom späteren Einsatz des Trennschalters stets gleich konzipiert ist und von vornherein späteren unterschiedlichen Anforderungen gerecht wird.

Das Magnetvorsteuerventil des aus DE 1 169 562 C bekannten Druckluftventils, z.B. zur Betätigung elektrischer Kontakte, arbeitet mit einem direkt von einer Spule magnetisch beaufschlagbaren Anker, der entgegengesetzt zur Anzugsrichtung von einer zwischen einem Handbetätigungsflansch des Ankers und dem Spulengehäuse angeordneten Feder beaufschlagt wird, die den Anker bei nicht bestromtem Magneten in der vom Schließelement beabstandeten ersten Stellung hält. Bei Bestromung des Magneten mit einem vorbestimmten Maximalwert wird der Anker aus der ersten Stellung in Anzugsrichtung gegen die Kraft der Feder zunächst zur zweiten Stellung in Anzugskontakt mit dem Schließelement und schließlich weiter und auch gegen die Kraft der Schließfeder über die zweite Stellung hinaus gezogen, bis das Schließelement vom Sitz abgehoben ist und ein Konus am Anker eine Auslassöffnung verschließt, in der Druck ansteht. Bei stromlosem Magneten wird der Anker von der Feder und vom am Konus wirkenden Druck in der Auslassöffnung wieder in die erste Stellung gebracht, wobei sich die Feder mangels einer Hubbegrenzung des Ankers weitestgehend entspannt.

Bei dem aus DE-U-1 803 373 bekannten Magnet-Servoventil enthält ein beweglicher Kern des Magneten an beiden Enden elastische Dichteinsätze, die zum wechselseitigen Verschließen und Freigeben zweier konischer Ventilsitze dienen, von denen einer stationär und der andere beweglich ist. Der Kern wird von einer Feder entgegengesetzt zur Anzugsrichtung und zum beweglichen Ventilsitz hin beaufschlagt. Aufgrund der Elastizität der Dichteinsätze gibt es keine eindeutig definierten Endstellungen des Kerns.

Weiterer Stand der Technik ist zu finden in US 4 387 280 A.

Der Erfindung liegt die Aufgabe zugrunde, ein Magnetvorsteuerventil der eingangs genannten Art anzugeben, das in einer Grundausstattung Anforderungen hinsichtlich einer optimal kurzen Schaltzeit bei Normalspannung und eines Nichtansprechens bei Unterspannung erfüllt.

Die gestellte Aufgabe wird mit den Merkmalen des Patentanspruchs 1 gelöst.

Erfindungsgemäß wird die Erkenntnis berücksichtigt, dass der Betätigungsmagnet in seiner Kraftkennlinie eine nur sehr schwache Anzugskraft entwickelt, solange bei Bestromung der Anker so weit wie möglich vom Kernteil entfernt ist. Diese Tatsache wird benutzt, um mit einer nur für diesen Zweck vorgesehenen Feder den Anker direkt möglichst weit vom Kernteil entfernt zu halten und damit zu verhindern, dass der Betätigungsmagnet bei Unterspannung durchschaltet, andererseits aber beim Maximalwert der Bestromung eine kurze Schaltzeit benötigt. Da der Anker in der von der Feder gehaltenen ersten Stellung bei Bestromung mit Unterspannung nur eine sehr geringe Anzugskraft zum Kernteil entwickelt, kann die Feder sehr schwach sein, um das Durchschalten bei Unterspannung zu verhindern und dennoch bei Normalspannung keinen spürbaren Einfluss auf die Schaltzeit zu nehmen. Das Magnetvorsteuerventil kann mit derselben Ausstattung für Trennschalter unabhängig von deren Einsatzbedingungen verwendet werden. Die schwache Feder braucht nur so ausgelegt zu werden, dass sie den Anker weiter vom Kernteil entfernt in einer Stellung hält, als es der Stellung entspricht, bei der zwischen dem Anker und dem Schließelement Anzugskontakt herrscht. Für den Anker ist ein Endanschlag vorgesehen, gegen den der Anker entgegengesetzt zur Anzugsrichtung anlegbar ist. Die Feder wird so ausgelegt, dass der Anker bei nicht bestromtem Betätigungsmagneten und auch bei Bestromung mit Unterspannung die erste Stellung zumindest weitgehend am oder direkt am Endanschlag einnimmt. Gegebenenfalls wird je nach Einsatzfall des Trennschalters, z.B. vor Ort, eine andere Magnetspule eingebaut. Die Schließfeder lässt sich hingegen genau auf ihre einzige Aufgabe abstimmen, das Schließelement am Sitz zu halten, so dass sie auch auf das Durchschalten des Betätigungsmagneten nur minimalen Einfluss hat (kurze Schaltzeit). Zum Erreichen einer extrem kurzen Schaltzeit ist es zweckmäßig, dass die Kraft der Feder kaum zunimmt, bis der Anker in Anzugskontakt mit dem Schließelement ist und dann durchzieht. Beispielsweise ändert sich die Kraft der Feder über den Hubweg des Ankers nur um ca. 10 bis 20 %. In einem konkreten Fall wird eine Feder verwendet, deren Federkraft über den Hubweg des Ankers von etwa 6 N nur bis etwa 7 N zunimmt. Im Regelfall reicht eine Feder aus, es könnten jedoch auch mehrere Federn in Serie geschaltet werden. Der vorbestimmte Wert der Strombeaufschlagung bei Unterspannung, der kleiner ist als der Maximalwert, kann etwa 30 bis 40 % des Maximalwerts betragen. Bei voller Stromleistung kann dafür Sorge getragen werden (z.B. mit einer speziellen Spule), dass zumindest für kurze Zeit sogar eine überhöhte Boost-Spannung aufgebracht wird.

Bei einer zweckmäßigen Ausführungsform wird die Feder zwischen dem Anker und dem festen Kernteil des Betätigungsmagneten angeordnet. In diesem Bereich des Betätigungsmagneten ist im Regelfall genügend Platz für eine lange Feder mit flacher Kennlinie. Vorzugsweise ist die Feder in einer von der Ankerseite in den Kernteil verlaufenden Bohrung angeordnet.

Es kann die Feder eine Schraubendruckfeder sein, die in der Bohrung einer Führungsfassung für zumindest die Endwindung der Schraubenfeder vorgesehen ist. Dadurch ist sichergestellt, dass die Feder keine seitliche Reibungshemmung auf den Anker ausübt.

Bei einer zweckmäßigen Ausführungsform ist dem Anker ein Betätigungsstößel zugeordnet, vorzugsweise ein damit einstückiger Betätigungsstößel, und wird die Feder so angeordnet, dass sie am Betätigungsstößel angreift. Hierbei kann es sich um eine Druckfeder handeln, oder je nach Einbauweise auch um ein Zugfeder.

Bei einer anderen Ausführungsform ist dem Anker an dem Betätigungsstößel gegenüberliegenden Ankerende ein weiterer Stößel zugeordnet, vorzugsweise einstückig mit dem Anker, und beaufschlagt die Feder den weiteren Stößel. Auch in diesem Bereich des Betätigungsmagneten ist genügend Platz zum Unterbringen einer langen Feder vorhanden, die eine flache Kennlinie hat. Hier kann eine Zugfeder oder eine Druckfeder eingesetzt werden.

Bei einer weiteren Ausführungsform ist zwischen dem Anker bzw. dem Betätigungsstößel des Ankers und einem Öffnungsstößel für das Schließelement ein Untersetzungshebel vorgesehen. In diesem Fall kann die Feder auch den Untersetzungshebel beaufschlagen, und zwar als Zugfeder oder Druckfeder.

Der Untersetzungshebel kann ein Kniehebel sein, der an einem Ventilgehäuse oder einem Abdeckgehäuse schwenkbar gelagert ist und einen vom Anker beaufschlagten längeren Arm und einen den Öffnungsstößel beaufschlagenden kürzeren Arm besitzt. Dabei kann die am Ventilgehäuse oder am Abdeckgehäuse abgestützte Feder (Druckfeder oder Zugfeder) den längeren oder den kürzeren Arm beaufschlagen.

Anhand der Zeichnung werden Ausführungsformen des Erfindungsgegenstandes erläutert. Es zeigen:
- Fig. 1: ein Blockschaltbild einer Hydrauliksteuerung für einen hydromechanischen Trennschalter,
- Fig. 2: eine Magnetvorsteuerventil für die Hydrauliksteuerung, teilweise im Schnitt,
- Fig. 3: ein vergrößertes Detail des Betätigungsmagneten des Magnetvorsteuerventils, und
- Fig. 4: einen vergrößerten Ausschnitt aus Fig. 3.

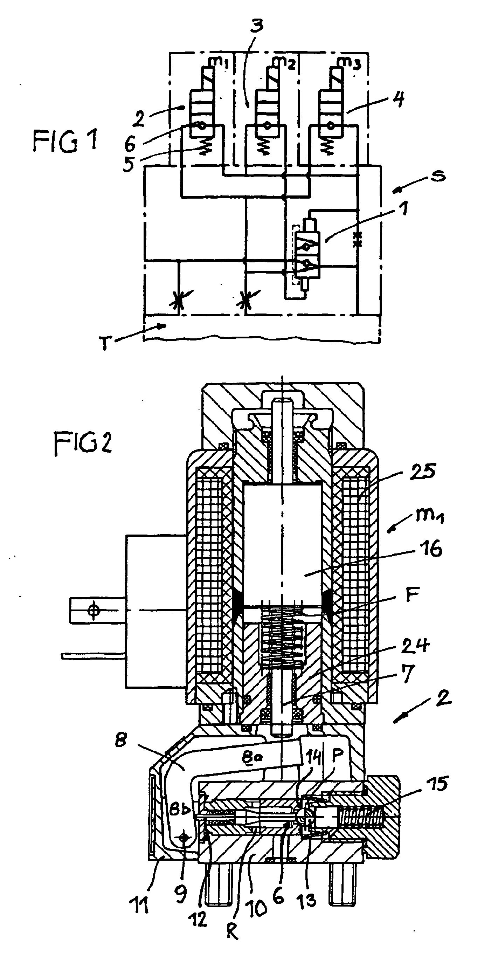

Fig. 1 ist ein Blockschaltbild einer beispielsweisen Ausführung einer elektrohydraulischen Steuervorrichtung S für einen nicht gezeigten Hochleistungs-Trennschalter. Eine Erläuterung eines solchen z.B. hydromechanischen Trennschalters ist aus dem Internet abrufbar von der Firma ABB, unter der Typenbezeichnung "Hydromechanical Spring Drives Type HMB".

Die Steuervorrichtung weist ein 3/2-Wegehauptventil 1 mit beidseitiger hydraulischer Vorsteuerung auf, in dessen Steuerkreisen erste, zweite und dritte Magnetvorsteuerventile 2, 3 und 4 jeweils mit einem Betätigungsmagneten m1, m2, m3 enthalten sind. Die Betätigungsmagneten m1, m2, m3 sind beispielsweise Schwarz/Weiß-Schaltmagneten mit einer vorbestimmten Kraftkennlinie.

Jedes Magnetvorsteuerventil 2, 3, 4 wird durch eine Schließfeder 5 in die gezeigte Schaltstellung (Absperrstellung) gebracht, und lässt sich bei Bestromen des Schaltmagneten in die andere Schaltstellung (Durchgangsstellung) umschalten. Die Magnetvorsteuerventile 2, 3, 4 sind beispielsweise Sitzventile 6 mit Rückschlag-Funktion und dienen zum Halten und Entlasten des jeweiligen Vorsteuerdrucks des Hauptventils 1.

Fig. 2 verdeutlicht beispielsweise das Magnetvorsteuerventil 2 mit seinem Betätigungsmagneten m1. Der Betätigungsmagnet m1 ist auf einem Abdeckgehäuse 11 befestigt, in welchem ein Ventilgehäuse 10 festgelegt ist. Eine Magnetspule 25 ist leicht austauschbar außen aufgeschoben. Ein Anker 16 weist einen Betätigungsstößel 7 auf, mit dem ein Untersetzungshebel 8 beaufschlagbar ist. Der Betätigungsstößel 7 durchsetzt einen festen Kernteil 24. Dazwischen ist eine Feder F angeordnet. Der Untersetzungshebel 8 ist ein Winkelhebel mit einem längeren Arm 8a und einem kürzeren Arm 8b. Der längere Arm 8a wird durch den Betätigungsstößel 7 beaufschlagt, während der kürzere Arm 8b einen Öffnungsstößel 12 eines Schließelements 13 des Sitzventils 6 beaufschlagt. Der Untersetzungshebel 8 ist um eine Achse 9 schwenkbar gelagert, die im Abdeckgehäuse 11 gehalten ist.

Das Schließelement 13 (eine Kugel oder ein kegeliges Schließelement) wird durch eine Schließfeder 15 an einem Ventilsitz 14 zwischen einer Druckseite P und einer Rücklaufseite R gehalten, solange der Betätigungsmagnet m1 nicht bestromt ist.

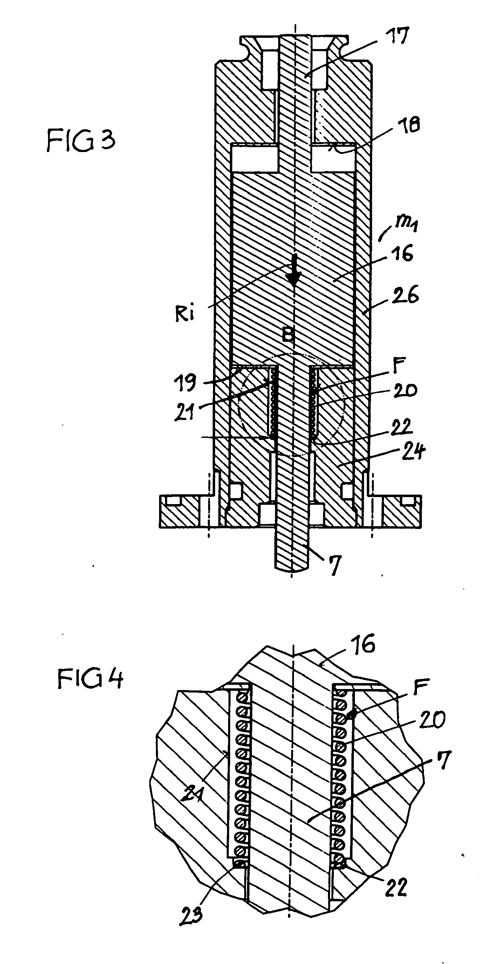

Fig. 3 verdeutlicht einen Teil des inneren Aufbaus des Betätigungsmagneten m1. Ein hülsenförmiges Gehäuse 26 (auf dem der Spulenträger angeordnet wird) enthält den Anker 16, der mit dem Betätigungsstößel 7 bei der gezeigten Ausführungsform einstückig ist. Am gegenüberliegenden Ankerende ist ein weiterer Stößel 17 angeordnet, der durch eine Bohrung nach außen ragt (z.B. zur manuellen Notbetätigung). In dem Gehäuse 15 werden ein unterer Endanschlag 19 und ein oberer Endanschlag 18 für den maximalen Hub des Ankers 16 gebildet, der bei Bestromung in Anzugsrichtung Ri zum Kernteil 14 gezogen wird.

Die zwischen dem Kernteil 24 und dem Anker 16 vorgesehene Feder F beaufschlagt den Anker 16 permanent entgegengesetzt zur Anzugsrichtung Ri mit schwacher Kraft. Die Feder F ist in der gezeigten Ausführungsform eine Schraubendruckfeder 20, die in einer Bohrung 21 des festen Kernteils 24 mit einer unteren Endwindung 23 (Fig. 4) in einer Führungsfassung 22 am unteren Ende der Bohrung 21 gehalten ist, und mit ihrer oberen Endwindung an der Unterseite des Ankers 16 (oder einer Zwischenplatte) anliegt.

Die Feder F hat eine flache Kennlinie, derart, dass beispielsweise innerhalb des Hubs des Ankers 16 die Federkraft von ca. 6 N nur bis auf ca. 7 N anwächst. Die Feder F ist so ausgelegt, dass sie bei nicht bestromtem Betätigungsmagneten m1 den Anker 16 in Richtung zum oberen Endanschlag 18 oder bis an diesen hin verlagert und hält. Die Feder F braucht demzufolge nur etwas stärker zu sein, als das Massengewicht des Ankers 16. Ferner ist die Feder F so ausgelegt, dass ihre Kraft gerade ausreicht, bei einer Bestromung des Betätigungsmagneten m1 nur mit Unterspannung der dann wegen der großen Entfernung zwischen dem Anker 16 und dem Kernteil 24 sehr schwachen Anzugskraft zu widerstehen. Der vorbestimmte Wert der Bestromung bei Unterspannung beträgt beispielsweise zwischen 30 und 40 % des Maximalwerts der Bestromung.

### Funktion:

Bei nicht bestromtem Betätigungsmagneten m1 wird der Anker 16 von der Feder F in der Nähe oder beim oberen Endanschlag 18 gehalten. Der Betätigungsstößel 7 ist gegebenenfalls nicht in Kontakt mit dem Arm 8a des Untersetzungshebels 8. Das Schließelement 13 wird von der Schließfeder 15 auf den Sitz 14 gehalten und durch den Druck bei P angepresst (leckagefreie Dichtheit).

Wird der Betätigungsmagnet m1 mit Unterspannung bestromt, dann verbleibt der Anker 16 in der Nähe des oberen Endanschlags 18. Das Schließelement 13 wird nicht vom Sitz 14 abgehoben. Erst wenn der vorbestimmte Wert der Bestromung überschritten wird, bewegt sich der Anker 16 schlagartig in Richtung zum unteren Endanschlag 19, wodurch über den Untersetzungshebel 8 und den Öffnungsstößel 12 das Schließelement 13 vom Sitz 14 abgehoben und die Verbindung von P zu R hergestellt wird.

Die in den Fig. 2 bis 4 gezeigte Ausführungsform ist nur eine von verschiedenen Möglichkeiten. Die Feder F könnte auch unterhalb des Ankers 16 in Fig. 3 am Betätigungsstößel 7 angreifen (Druckfeder oder Zugfeder), oder oberhalb des Ankers 16 den weiteren Stößel 17 beaufschlagen (Zugfeder oder Druckfeder). Ferner ist es möglich, die Feder F zwischen dem längeren Arm 8a des Umlenkhebels 8 und dem Ventilgehäuse 10 zu platzieren, oder zwischen dem kürzeren Arm 8b und dem Ventilgehäuse 10. Eine weitere Möglichkeit (z.B. eine Zugfeder) bestünde darin, die Feder F zwischen dem Abdeckgehäuse 11 und dem längeren oder dem kürzeren Arm 8a oder 8b zu platzieren. Im Grunde genommen ist jede Position der Feder F innerhalb des Kraftübertragungsweges vom Anker 16 zum Schließelement 13 möglich, um sicherzustellen, dass der Anker 16 in nicht bestromtem Zustand des Betätigungsmagneten auch ohne die Rückwirkung der Schließfeder 15 von der Stellung, die er bei Anzugskontakt mit dem Schließelement 13 hätte, weiter weg vom Kernteil 24 zum oder an den Endanschlag 18 verlagert wird. Auf diese Weise wird erreicht, dass die bei Bestromung mit Unterspannung generierte Anzugskraft nur sehr klein ist und von der schwachen Feder F gehalten wird.

## Patentansprüche

1. Magnetvorsteuerventil (2, 3, 4), insbesondere für einen hydromechanischen Trennschalter (T), mit
einem Schließelement (13), das zumindest durch die Kraft einer Schließfeder (15) an einen stationären Sitz (14) anlegbar ist,
einem Betätigungsmagneten (m1, m2, m3) mit einem bei Bestromung mit einem vorbestimmten Maximalwert zum Abheben des Schließelementes (13) vom Sitz (14) gegen die Kraft der Schließfeder (15) über einen Hubweg in Anzugsrichtung (Ri) bewegbaren Anker (16), und
einer im Bereich des Ankers (16) oder im Kraftübertragungsweg vom Anker zum Schließelement (13) angeordneten Feder (F), die den Anker (16) permanent entgegengesetzt zur Anzugsrichtung (Ri) beaufschlagt und zumindest bei nichtbestromtem Betätigungsmagneten den Anker (16) in einer ersten Stellung im Abstand von einer zweiten Stellung hält, die der Anker (16) bei Anzugskontakt mit dem am Sitz (14) anliegenden Schließelement (16) einnimmt,
**dadurch gekennzeichnet,**
**dass** der Betätigungsmagnet (m1, m2, m3) einen festen Kernteil (24) für den Anker (16) aufweist,
**dass** für den Anker (16) ein Endanschlag (18) vorgesehen ist, an dem der Anker (16) entgegengesetzt zur Anzugsrichtung (Ri) anlegbar ist,
**dass** der Anker (16) in der ersten Stellung zumindest weitgehend am oder direkt am Endanschlag (18) weiter vom festen Kernteil (24) entfernt ist als in der zweiten Stellung,
**dass** die Federkraft der Feder (F) innerhalb des Hubweges des Ankers (16) aus der ersten Stellung um nur 10 % bis 20 % variiert, und
**dass** der Anker (16) von der Feder (F) bis zu 30 % bis 40 % des vorbestimmten Maximalwerts der Bestromung in der ersten Stellung beabstandet vom festen Kernteil (24) haltbar ist.

2. Magnetvorsteuerventil nach Anspruch 1, **dadurch gekennzeichnet, dass** die Feder (F) zwischen dem Anker (16) und dem Kernteil (24), vorzugsweise in einer von der Ankerseite in den Kernteil (24) verlaufenden Bohrung (21), angeordnet ist.

3. Magnetvorsteuerventil nach Anspruch 2, **dadurch gekennzeichnet, dass** die Feder (F) eine Schraubendruckfeder (20) ist, und dass in der Bohrung (21) eine Führungsfassung (22) für zumindest eine Endwindung (23) der Schraubendruckfeder (20) vorgesehen ist.

4. Magnetvorsteuerventil nach Anspruch 1, **dadurch gekennzeichnet, dass** die Feder (F) an einem dem Anker (16) zugeordneten oder mit dem Anker einstückigen Betätigungsstößel (7) angreift.

5. Magnetvorsteuerventil nach Anspruch 4, **dadurch gekennzeichnet, dass** dem Anker (16) am dem Betätigungsstößel (7) gegenüberliegenden Ankerende ein weiterer Stößel (17), vorzugsweise einstückig mit dem Anker, zugeordnet ist, und dass die Feder den weiteren Stößel beaufschlagt.

6. Magnetvorsteuerventil nach Anspruch 4 oder 5, **dadurch gekennzeichnet, dass** die am Stößel bzw. Betätigungsstößel (7, 17) angreifende Feder eine Zugfeder ist.

7. Magnetvorsteuerventil nach Anspruch 1, **dadurch gekennzeichnet, dass** zwischen dem Anker (16) und einem Öffnungsstößel (12) für das Schließelement (13) ein Untersetzungshebel (8) vorgesehen ist, und dass die Feder den Untersetzungshebel (8) beaufschlagt.

8. Magnetvorsteuerventil nach Anspruch 7, **dadurch gekennzeichnet, dass** der Untersetzungshebel (8) ein an einem Ventilgehäuse (10) oder einem Abdeckgehäuse (11) schwenkbar gelagerter Kniehebel mit einem vom Anker (16) beaufschlagbaren längeren Arm (8a) und einem den Öffnungsstößel (12) beaufschlagenden kürzeren Arm (8b) ist, und dass die am Ventilgehäuse oder am Abdeckgehäuse abgestützte Feder den längeren oder den kürzeren Arm beaufschlagt.

9. Magnetvorsteuerventil nach Anspruch 1, **dadurch gekennzeichnet, dass** die Federkraft der Feder (F) 6 bis 7 N beträgt.

## Claims

1. Solenoid pilot valve (2, 3, 4), in particular for a hydromechanical disconnecting switch (T), with
a closing element (13) which can be brought to bear against a stationary seat (14) at least by the force of a closing spring (15),
an actuating magnet (m1, m2, m3) with an armature (16) which, when current with a predetermined maximum value is applied, can be moved, counter to the force of the closing spring (15), over a stroke travel in the pull-up direction (Ri) in order to lift off the closing element (13) from the seat (14), and
a spring (F) which is arranged in the region of the armature (16) or in the force transmission path from the armature to the closing element (13) and which permanently acts upon the armature (16) opposite to the pull-up direction (Ri) and, at least when the actuating magnet is not live, holds the armature (16) in a first position at a distance from a second position which the armature (16) assumes upon pull-up contact with the closing element (16) bearing against the seat (14),
**characterized**
**in that** the actuating magnet (m1, m2, m3) has a fixed core part (24) for the armature (16),
**in that**, for the armature (16), a limit stop (18) is provided, against which the armature (16) can be brought to bear opposite to the pull-up direction (Ri),
**in that** the armature (16), in the first position at least largely at or directly at the limit stop (18), is further away from the fixed core part (24) than in the second position,
**in that** the spring force of the spring (F) varies by only 10% to 20% within the stroke travel of the armature (16) out of the first position, and
**in that** the armature (16) can be held by the spring (F) in the first position, spaced apart from the fixed core part (24), up to 30% to 40% of the predetermined maximum current application value.

2. Solenoid pilot valve according to Claim 1, **characterized in that** the spring (F) is arranged between the armature (16) and the core part (24), preferably in a bore (21) running from the armature side into the core part (24).

3. Solenoid pilot valve according to Claim 2, **characterized in that** the spring (F) is a helical compression spring (20), and **in that** a guide holder (22) for at least one end turn (23) of the helical compression spring (20) is provided in the bore (21).

4. Solenoid pilot valve according to Claim 1, **characterized in that** the spring (F) engages on an actuating tappet (7) which is assigned to the armature (16) or in one piece with the armature.

5. Solenoid pilot valve according to Claim 4, **characterized in that** the armature (16) is assigned, at the armature end lying opposite the actuating tappet (7), a further tappet (17), preferably in one piece with the armature, and **in that** the spring acts upon the further tappet.

6. Solenoid pilot valve according to Claim 4 or 5, **characterized in that** the spring engaging on the tappet or actuating tappet (7, 17) is a tension spring.

7. Solenoid pilot valve according to Claim 1, **characterized in that** a reduction lever (8) is provided between the armature (16) and an opening tappet (12) for the closing element (13), and **in that** the spring acts upon the reduction lever (8).

8. Solenoid pilot valve according to Claim 7, **characterized in that** the reduction lever (8) is a toggle lever mounted pivotably on a valve housing (10) or a cover housing (11) and having a longer arm (8a) capable of being acted upon by the armature (16) and a shorter arm (8b) acting upon the opening tappet (12), and **in that** the spring supported on the valve housing or on the cover housing acts upon the longer or the shorter arm.

9. Solenoid pilot valve according to Claim 1, **characterized in that** the spring force of the spring (F) amounts to 6 to 7 N.

## Revendications

1. Electrovanne pilote (2, 3, 4), en particulier pour un sectionneur hydromécanique (T), comprenant
un élément de fermeture (13), qui peut être appliqué au moins par la force d'un ressort de fermeture (15) sur un siège stationnaire (14),
un aimant de commande (m1, m2, m3) avec un induit (16) mobile sur une course dans la direction d'excitation (Ri), lors d'une alimentation en courant d'une valeur maximale prédéfinie, pour décoller l'élément de fermeture (13) du siège (14) contre la force du ressort de fermeture (15), et
un ressort (F) disposé dans la zone de l'induit (16) ou dans le parcours de transmission des forces de l'induit à l'élément de fermeture (13), lequel ressort sollicite l'induit (16) en permanence dans le sens contraire à la direction d'excitation (Ri) et maintient l'induit (16), au moins lorsque l'aimant de commande n'est pas alimenté en courant, dans une première position à distance d'une seconde position, qu'occupe l'induit (16) lors d'un contact d'excitation avec l'élément de fermeture (16) s'appliquant sur le siège (14),
**caractérisée en ce que**
l'aimant de commande (m1, m2, m3) présente une partie de noyau fixe (24) pour l'induit (16),
une butée de fin de course (18), sur laquelle peut s'appliquer l'induit (16) dans le sens contraire à la direction d'excitation (Ri), est prévue pour l'induit (16),
l'induit (16) dans la première position, au moins largement sur ou directement sur la butée de fin de course (18), est plus distant de la partie de noyau fixe (24) que dans la seconde position,
la force de ressort du ressort (F) ne varie que de 10% à 20% à l'intérieur de la course de l'induit (16) à partir de la première position, et
l'induit (16) peut être maintenu par le ressort (F) dans la première position, à distance de la partie de noyau fixe (24), jusqu'à 30% à 40% de la valeur maximale prédéfinie de l'alimentation en courant.

2. Electrovanne pilote suivant la revendication 1, **caractérisée en ce que** le ressort (F) est disposé entre l'induit (16) et la partie de noyau (24), de préférence dans un alésage (21) s'étendant du côté induit dans la partie de noyau (24).

3. Electrovanne pilote suivant la revendication 2, **caractérisée en ce que** le ressort (F) est un ressort de pression hélicoïdal (20), et qu'une sertissure (22) pour au moins une spire extérieure (23) du ressort de pression hélicoïdal (20) est prévue dans l'alésage (21).

4. Electrovanne pilote suivant la revendication 1, **caractérisée en ce que** le ressort (F) agit sur un poussoir de commande (7) associé à l'induit (16) ou monobloc avec l'induit.

5. Electrovanne pilote suivant la revendication 4, **caractérisée en ce qu'**un autre poussoir (17), de préférence monobloc avec l'induit, est associé à l'induit (16) sur l'extrémité de l'induit opposée au poussoir de commande (7), et que le ressort sollicite l'autre poussoir.

6. Electrovanne pilote suivant l'une des revendications 4 et 5, **caractérisée en ce que** le ressort agissant sur le poussoir ou le poussoir de commande (7, 17) est un ressort de traction.

7. Electrovanne pilote suivant la revendication 1, **caractérisée en ce qu'**un levier démultiplicateur (8) est prévu entre l'induit (16) et un poussoir d'ouverture (12) pour l'élément de fermeture (13), et que le ressort sollicite le levier démultiplicateur (8).

8. Electrovanne pilote suivant la revendication 7, **caractérisée en ce que** le levier démultiplicateur (8) est un levier à genouillère monté pivotant sur une cage de soupape (10) ou sur un corps de recouvrement (11), avec un bras (8a) plus long pouvant être sollicité par l'induit (16) et un bras plus court (8b) sollicitant le poussoir d'ouverture (12), et que le ressort, supporté sur la cage de soupape ou sur le corps de recouvrement, sollicite le bras le plus long ou le bras le plus court.

9. Electrovanne pilote suivant la revendication 1, **caractérisée en ce que** la force du ressort (F) est de 6 à 7 N.
